# EUROPEAN PATENT APPLICATION

(11) **EP 2 022 805 A2**
(43) Date of publication of application: **11.02.2009**
(21) Application number: 08160481.1
(22) Date of filing: 16.07.2008
(51) Int. Cl.: C08F 210/00, C08F 226/06, C08F 226/10

(54) **Copolymers based on N-vinyllactams and olefins as their use as solubilizers for slightly water-soluble compounds**

(30) Priority: 03.08.2007 EP 07113765
(71) Applicant: BASF SE, 67056 Ludwigshafen (DE)
(72) Inventor: Venkatesh, Rajan, 68167, Mannheim (DE); Mertoglu, Murat, 67059, Ludwigshafen (DE); Meyer-Böhm, Kathrin, 90537, Feucht (DE)

(57) **Abstract**

The use of copolymers obtained by free-radical polymerization of a mixture of
i) 0.1 to 40% by weight of an olefine, and
ii) 60 to 99.9 % by weight of N-vinyl lactam,
with the proviso that the total of components i), ii) and iii) equals 100% by weight,
as solubilizers for slightly water-soluble bioactive substances.

## Description

The present invention relates to the use of copolymers obtainable by polymerizing N-vinyl lactams and olefins as solubilizers for slightly water-soluble bioactive substances, preparations and dosage forms.

In the production of homogeneous preparations in particular of bioactive substances, solubilization of hydrophobic, i.e. slightly water-soluble substances, has become of very great practical importance.

Solubilization means making substances which are slightly soluble or insoluble in a particular solvent, especially water, soluble by surface-active compounds, the solubilizers. Such solubilizers are able to convert substances of low or zero solubility in water into clear, or at most opalescent, aqueous solutions without altering the chemical structure of these substances (cf. Römpp Chemie Lexikon, 9th edition, Vol. 5. p. 4203, Thieme Verlag, Stuttgart, 1992).

The produced solubilizates are characterized by the substance of low or zero solubility in water being in the form of a colloidal solution in the aggregates of molecules of the surface-active compounds which form in aqueous solution, such as, for example, hydrophobic domains or micells. The resulting solutions are stable or metastable single-phase systems which appear optically clear or opalescent and can be produced without energy input.

Solubilizers may for example improve the appearance of cosmetic formulations and of food preparations by making the formulations transparent. In the case of pharmaceutical preparations, there may additionally be an increase in the bioavailability and thus the effect of drugs through the use of solubilizers.

The solubilizers employed for pharmaceutical drugs and cosmetic active substances are mainly surfactants such as ethoxylated castor oil or ethoxylated hydrogenated castor oil, ethoxylated sorbitan fatty acid esters or ethoxylated hydroxystearic acid.

However, the solubilizers described above and employed to date show a number of technical disadvantages when used.

The solubilizing effect of known solubilizers is only low for some slightly soluble drugs such as, for example, clotrimazole.

EP-A 876 819 describes the use of copolymers of at least 60% by weight of N-vinyl pyrrolidone and amides or esters with long-chain alkyl groups.

EP-A 948 957 describes the use of copolymers of monoethylenically unsaturated carboxylic acids such as, for example, acrylic acid and hydrophobically modified comonomers such as, for example N-alkyl- or N,N-dialkylamides of unsaturated carboxylic acids with C₈-C₃₀-alkyl radicals.

DE-A 199 350 63 discloses polyalkylene oxide-containing graft copolymers based on vinyllactams and vinyl acetate, and the use thereof as gas hydrate inhibitors.

EP-A 953 347 discloses the use of polyalkylene oxide-containing graft copolymers as solubilizers. The graft copolymers described therein and composed of vinyl acetate and polyalkylene oxides are frequently not powders but glutinous liquids, which is a technical disadvantage during use.

A further desirable requirement is for solubilizers to be able to form so-called "solid solutions" with slightly soluble substances. The term solid solutions refers to a state in which a substance is in the form of a microdispersion or, in the ideal case, a molecular dispersion in a solid matrix, for example a polymer matrix. Such solid solutions result, for example when used in the solid pharmaceutical dosage forms of a slightly soluble active ingredient, in an improved release of the active ingredient. An important requirement is that such solid solutions be stable if stored even for a prolonged period, i.e. that the active ingredient does not crystallize out. Also important is the capacity of the solid solution, in other words the ability to form stable solid solutions with maximum content of active ingredients.

An important part is played in the formation of solid solutions not only by the fundamental ability of the solubilizers to form solid solutions but also by the hygroscopicity of the solubilizers. Solubilizers which absorb too much water from the ambient air lead to liquefactions of the solid solution and to unwanted crystallization of the active ingredients. A hygroscopicity which is too great may also cause problems in processing to dosage forms.

Some of the previously disclosed polymeric solubilizers have the disadvantage that they either do not form stable solid solutions or are too hygroscopic. There is moreover room for improvement in relation to solubilization in aqueous systems. Some of the known solubilizers also have disadvantages in relation to processability because of their tendency to tackiness, because they do not represent sufficiently free-flowing powders.

Copolymers of N-vinyl lactams and olefins are in principle known in the art.

According to WO 03/097707 copolymers of N-vinyl lactam and olefins are obtained by radical copolymerisation in the presence of a solvent, where the solvent is an ester of an aromatic carboxylic acid with an aliphatic or aromatic alcohol. Such copolymers are used as emulsifiers for lubricants.

According to US 3,287,272 copolymers of N-vinyl lactams and olefins which are alkylated polymers of N-vinyl lactams obtained by the simultaneous polymerization of N-vinyl lactams and alkylation by the olefin by radical polymerization in an organic solvent such as an alcohol or methylene chloride. The preparation of such copolymers is also known from US 3,406,238, US 3,417,054, US 3,423,381 and US 3,423,367. Such polymers can for instance be used in lubricant compositions, automotive additives and the like. According to US 5,219,559 or US 5,026,540 similar copolymers of N-vinyl lactam and long chain olefins are used as waterproofing agents in personal skin care compositions.

Copolymers of N-vinyl lactams and their use as dispersants in metal working fluids are known from WO 00/78901.

The object of the present invention was to provide novel and improved solubilizers for applications in pharmaceuticals, cosmetics, food technology, agricultural technology or other industries not having the described disadvantages.

The object has been achieved according to the invention by the use of water-soluble or water-dispersible copolymers which are obtained by free-radical polymerization of a mixture of
i) 0.1 to 40% by weight of an olefine, and
ii) 60 to 99.9 % by weight of N-vinyl lactam
with the proviso that the total of i) and ii) equals 100% by weight.

Preferred polymers are obtained from:
i) 3 to 30% by weight of an olefine
ii) 70 to 97% by weight of N-vinyl lactam

Particularly preferred polymers are obtained from:
i) 5 to 20% by weight of an olefine
ii) 80 to 95 % by weight of N-vinyl lactam

The proviso that the total of components i) and ii) equals 100% by weight also applies to the preferred and particularly preferred compositions.

A suitable N-vinyl lactam is N-vinylcaprolactam or N-vinyl pyrrolidone or mixtures thereof. N-vinyl pyrrolidone is preferably used.

Suitable olefins are linear or branched monoolefines, preferably alpha-olefins, with 5 to 40, preferably 5 to 20 carbon atoms.

The olefins may be one of the following:
2-methylbutene-1, 3-methylbutene-1, 3,3-dimethyl-2-isopropylbutene-1, 2-methylbutene-2, 3-methylbutene-2, pentene-1, 2-methylpentene-1, 3-methylpentene-1, 4-methylpentene-1, pentene-2, 2-methylpentene-2, 3-methylpentene-2, 4-methylpentene-2, 2-ethylpentene-1, 3-ethylpentene-1, 4-ethylpentene-1, 2-ethylpentene-2, 3-ethylpentene-2, 4-ethylpentene-2, 2,4,4-trimethylpentene-1, 2,4,4-trimethylpentene-2, 3-ethyl-2-methylpentene-1, 3,4,4-trimethylpentene-2, 2-methyl-3-ethylpentene-2, hexene-1, 2-methylhexene-1, 3-methylhexene-1, 4-methylhexene-1, 5-methylhexene-1, hexene-2, 2-methylhexene-2, 3-methylhexene-2, 4-methylhexene-2, 5-methylhexene-2, hexene-3, 2-methylhexene-3, 3-methylhexene-3, 4-methylhexene-3, 5-methylhexene-3, 2,2-dimethylhexene-3, 2,3-dimethylhexene-2, 2,5-dimethylhexene-3, 2,5-dimethylhexene-2, 3,4-dimethylhexene-1, 3,4-dimethylhexene-3, 5,5-dimethylhexene-2, 2,4-dimethylhexene-1, Heptene-1, 2-methylheptene-1, 3-methylheptene-1, 4-methylheptene-1, 5-methylheptene-1, 6-methylheptene-1, Heptene-2, 2-methylheptene-2, 3-methylheptene-2, 4-methylheptene-2, 5-methylheptene-2, 6-methylheptene-2, heptene-3, 2-methylheptene-3, 3-methylheptene-3, 4-methylheptene-3, 5-methylheptene-3, 6-methylheptene-3, 6,6-dimethylheptene-1, 3,3-dimethylheptene-1, 3,6-dimethylheptene-1, 2,6-dimethylheptene-2, 2,3-dimethylheptene-2, 3,5-dimethylheptene-2, 4,5-dimethylheptene-2, 4,6-dimethylheptene-2, 4-ethylheptene-3, 2,6-dimethylheptene-3, 4,6-dimethylheptene-3, 2,5-dimethylheptene-4, Octene-1, 2-methyloctene-1, 3-methyloctene-1, 4-methyloctene-1, 5-methyloctene-1, 6-methyloctene-1, 7-methyloctene-1, octene-2, 2-methyloctene-2, 3-methyloctene-2, 4-methyloctene-2, 5-methyloctene-2, 6-methyloctene-2, 7-methyloctene-2, Octene-3, 2-methyloctene-3, 3-methyloctene-3, 4-methyloctene-3, 5-methyloctene-3, 6-methyloctene-3, 7-methyloctene-3,Octene-4, 2-methyloctene-4, 3-methyloctene-4, 4-methyloctene-4, 5-methyloctene-4, 6-methyloctene-4, 7-methyloctene-4, 7,7-dimethyloctene-1, 3,3-dimethyloctene-1, 4,7-dimethyloctene-1, 2,7-dimethyloctene-2, 2,3-dimethyloctene-2, 3,6-dimethyloctene-2, 4,5-dimethyloctene-2, 4,6-dimethyloctene-2, 4,7-dimethyloctene-2, 4-ethyloctene-3, 2,7-dimethyloctene-3, 4,7-dimethyloctene-3, 2,5-dimethyloctene-4, nonene-1, 2-methylnonene-1, 3-methylnonene-1, 4-methylnonene-1, 5-methylnonene-1, 6-methylnonene-1, 7-methylnonene-1, 8-methylnonene-1, nonene-2, 2-methylnonene-2, 3-methylnonene-2, 4-methylnonene-2, 5-methylnonene-2, 6-methylnonene-2, 7-methylnonene-2, 8-methylnonene-2, nonene-3, 2-methylnonene-3, 3-methylnonene-3, 4-methylnonene-3, 5-methylnonene-3, 6-methylnonene-3, 7-methylnonene-3, 8-methylnonene-3, nonene-4, 2-methylnonene-4, 3-methylnonene-4, 4-methylnonene-4, 5-methylnonene-4, 6-methylnonene-4, 7-methylnonene-4, 8-methylnonene-4, 4,8-dimethylnonene-1, 4,8-dimethylnonene-4, 2,8-dimethylnonene-4, Decene-1, 2-methyldecene-1, 3-methyldecene-1, 4-methyldecene-1, 5-methyldecene-1, 6-methyldecene-1, 7-methyldecene-1, 8-methyldecene-1, 9-methyldecene-1 Decene-2, 2-methyldecene-2, 3-methyldecene-2, 4-methyldecene-2, 5-methyldecene-2, 6-methyldecene-2, 7-methyldecene-2, 8-methyldecene-2, 9-methyldecene-2, decene-3, 2-methyldecene-3, 3-methyldecene-3, 4-methyldecene-3, 5-methyldecene-3, 6-methyldecene-3, 7-methyldecene-3, 8-methyldecene-3, 9-methyldecene-3, decene-4, 2-methyldecene-4, 3-methyldecene-4, 4-methyldecene-4, 5-methyldecene-4, 6-methyldecene-4, 7-methyldecene-4, 8-methyldecene-4, 9-methyldecene-4, Decene-5, 2-methyldecene-5, 3-methyldecene-5, 4-methyldecene-5, 5-methyldecene-5, 6-methyldecene-5, 7-methyldecene-5, 8-methyldecene-5, 9-methyldecene-5, 2,4-dimethyldecene-1, 2,4-dimethyldecene-2, 4,8-dimethyldecene-1, Undecene-1, 2-methylundecene-1, 3-methylundecene-1, 4-methylundecene-1, 5-methylundecene-1, 6-methylundecene-1, 7-methylundecene-1, 8-methylundecene-1, 9-methylundecene-1, 10-methylundecene-1, undecene-2, 2-methylundecene-2, 3-methylundecene-2, 4-methylundecene-2, 5-methylundecene-2, 6-methylundecene-2, 7-methylundecene-2, 8-methylundecene-2, 9-methylundecene-2, 10-methylundecene-2, Undecene-3, 2-methylundecene-3, 3-methylundecene-3, 4-methylundecene-3, 5-methylundecene-3, 6-methylundecene-3, 7-methylundecene-3, 8-methylundecene-3, 9-methylundecene-3, 10-methylundecene-3, undecene-4, 2-methylundecene-4, 3-methylundecene-4, 4-methylundecene-4, 5-methylundecene-4, 6-methylundecene-4, 7-methylundecene-4, 8-methylundecene-4, 9-methylundecene-4, 10-methylundecene-4, undecene-5, 2-methylundecene-5, 3-methylundecene-5, 4-methylundecene-5, 5-methylundecene-5, 6-methylundecene-5, 7-methylundecene-5, 8-methylundecene-5, 9-methylundecene-5, 10-methylundecene-5, dodecene-1, dodecene-2, dodecene-3, dodecene-4, dodecene-5, dodecene-6, 4,8-dimethyldecene-1, 4-ethyldecene-1, 6-ethyldecene-1, 8-ethyldecene-1, 2,5,8-trimethylnonene-1, tridecene-1, tridecene-2, tridecene-3, tridecene-4, tridecene-5, tridecene-6, 2-methyldodecene-1, 11-methyldodecene-1, 2,5-dimethylundecene-2, 6,10-dimethylundecene-1, tetradecene-1, tetradecene-2, tetradecene-3, tetradecene-4, tetradecene-5, tetradecene-6, tetradecene-7, 2-methyltridecene-1, 2-ethyldodecene-1, 2,6,10-trimethylundecene-1, 2,6-dimethyldodecene-2, 11-methyltridecene-1, 9-methyltridecene-1, 7-methyltridecene-1, 8-ethyldodecene-1, 6-ethyldodecene-1, 4-ethyldodecene-1, 6-butyldecene-1, pentadecene-1, pentadecene-2, pentadecene-3, pentadecene-4, pentadecene-5, pentadecene-6, pentadecene-7, 2-methyltetradecene-1, 3,7,11-trimethyldodecene-1, 2,6,10-trimethyldodecene-1, hexadecene-1, hexadecene-2, hexadecene-3, hexadecene-4, hexadecene-5, hexadecene-6, hexadecene-7, hexadecene-8, 2-methylpenetadecene-1, 3,7,11-trimethyltridecenee-1, 4,8,12-trimethyltridecene-1, 11-methylpenetadecene-1, 13-methylpenetadecene-1, 7-methylpenetadecene-1, 9-methylpenetadecene-1, 12-ethyltetradecene-1, 8-ethyltetradecene-1, 4-ethyltetradecene-1, 8-butyldodecene-1, 6-butyldodecene-1 heptadecene-1, heptadecene-2, heptadecene-3, heptadecene-4, heptadecene-5, heptadecene-6, heptadecene-7, heptadecene-8, 2-methylhexadecene-1, 4,8,12-trimethyltetradecenee-1, octadecene-1, octadecene-2, octadecene-3, octadecene-4, octadecene-5, octadecene-6, octadecene-7, octadecene-8, octadecene-9, 2-methylheptadecene-1, 13-methylheptadecene-1, 10-butyltetradecene-1, 6-butyltetradecene-1, 8-butyltetradecene-1, 10-ethylhexadecene-1, nonadecene-1, nonadecene-2, 1-methyloctadecene-1, 7,11,15-trimethylhexadecene-1, eicosene-1, eicosene-2, 2,6,10,14-tetramethylhexadecene-2, 3,7,11,15-tetramethylhexadecene-2, 2,7,11,15-tetramethylhedecene-1, docosene-1, docosene-2, docosene-7, 4,9,13,17-tetramethyloctadecene-1, tetracosene-1, tetracosene-2, tetracosene-9, hexacosene-1, hexacosene-2, hexacosene-9, triacontene-1, dotriacontenee-1 or tritriacontene-1 as well as the cyclic alkenes cyclopentene, 2-methylcyclopentene-1, 3-methylcyclopentene-1, 4-methylcyclopentene-1, 3-butylcyclopentene-1, vinylcyclopentan, cyclohexene, 2-methylcyclohexene-1, 3-methylcyclohexene-1, 4-methylcyclohexene-1, 1,4-dimethylcyclohexene-1, 3,3,5-trimethylcyclohexene-1, 4-cyclopenetylcyclohexene-1, vinylcyclohexan, cycloheptene, 1,2-dimethylcycloheptene-1, cyclooctene, 2-methylcyclooctene-1, 3-methylcyclooctene-1, 4-methylcyclooctene-1, 5-methylcyclooctene-1, cyclononene, cyclodecene, cycloundecene, cyclododecene, bicyclo[2.2.1]heptene-2, 5-ethylbicyclo[2.2.1]heptene-2, 2-methylbicyclo[2.2.2]octene-2, bicyclo[3.3.1]nonene-2 or bicyclo[3.2.2]nonene-6.

Preferably used are 1-alkenes, for example pentene-1, hexene-1, heptene-1, octene-1, nonene-1, decene-1, undecene-1, dodecene-1, 2,4,4-trimethylpentene-1, 2,4-dimethylhexene-1, 6,6-dimethylheptene-1, 2-methyloctene-1, tridecene-1, tetradecene-1, hexadecene-1, heptadecene-1, octadecene-1, nonadecene-1, eicosene-1, docosene-1, tetracosene-1, 2,6-dimethyldodecene-1, 6-butyldecene-1, 4,8,12-trimethyldecene-1 or 2-methylheptadecene-1.

Also, mixtures of said monomers may be used.

The preparation takes place by free-radical polymerization, preferably solution polymerization, in nonaqueous organic solvents or in mixed nonaqueous/aqueous solvents.

Preferred organic solvents are those with a boiling point of from 50 °C to 150 °C under normal atmospheric pressure.

Suitable nonaqueous organic solvents are, for example, alcohols such as methanol, ethanol, n-propanol and isopropanol, and glycols such as ethylene glycol and glycerol.

Further suitable solvents are esters such as, for example, ethyl acetate or butyl acetate.

The polymerization is preferably carried out at temperatures from 60 to 100°C.

Free-radical initiators are employed to initiate the polymerization. The amounts of initiator or initiator mixtures used, based on monomer employed, are between 0.01 and 10% by weight, preferably between 0.3 and 5% by weight.

Depending on the nature of the solvent used, both organic and inorganic peroxides are suitable, such as sodium persultate or azo initiators such as azobisisobutyronitrile, azobis(2-amidopropane) dihydrochloride or 2,2'-azobis(2-methylbutyronitrile).

Examples of peroxide initiators are dibenzoyl peroxide, diacetyl peroxide, succinyl peroxide, tert-butyl perpivalate, tert-butyl 2-ethylhexanoate, tert-butyl permaleate, bis-(tert-butylperoxy)cyclohexane, tert-butylperoxy isopropyl carbonate, tert-butyl peracetate, 2,2-bis(tert-butylperoxy)butane, dicumyl peroxide, di-tert-amyl peroxide, di-tert-butyl peroxide, p-menthane hydroperoxide, pinane hydroperoxide, cumene hydroperoxide, tert-butyl hydroperoxide, hydrogen peroxide and mixtures of said initiators. Said initiators can also be used in combination with redox components such as ascorbic acid.

Particularly suitable initiators are tert-butyl perneodecanoate, tert-butyl perpivalate or tert-butyl 2-ethylhexanoate.

Suitable molecular weight regulators are sulfhydryl compounds such as alkyl mercaptans, e.g. n-dodecyl mercaptan, tert-dodecyl mercaptan, thioglycolic acid and esters thereof, mercaptoalkanols such as mercaptoethanol. Further suitable regulators are mentioned for example in DE 197 12 247 A1, page 4. The necessary amount of the molecular weight regulators is in the range from 0 to 5% by weight based on the amount of (co)monomers to be polymerized. If regulators are used, the amount employed is in particular in the range from 0.05 to 2% by weight, particularly preferably 0.1 to 1.5% by weight. However, polymerization in the absence of a regulator is very particularly preferred.

The monomer or a monomer mixture may be introduced together with the initiator, which is generally present in solution, into a stirred reactor or metered continuously or in a plurality of consecutive stages into the polymerization reactor (feed process). It is usual in the feed process for the reactor to be charged, before the start of the actual polymerization, with the so-called "initial charge" which initial charge may comprise besides the solvent (in order to make stirring of the reactor possible) also partial quantities, rarely the total quantity, intended for the polymerization, of the starting materials such as monomers, regulators etc. or partial quantities of the feeds (generally monomer feed and initiator feed).

According to the present invention the olefine is preferably partly or in total, especially in total, comprised by the initial charge.

After the polymerization the organic solvent may be distilled off by aqueous steam distillation.

The solids content of the resulting aqueous polymer dispersions or solutions is usually from 10 to 70% by weight, preferably 15 to 60% by weight, particularly preferably 15 to 40% by weight.

The polymer dispersions or solutions can be converted into powder form or into granules by various drying processes such as, for example, spray drying, fluidized spray drying, drum drying or freeze drying. The copolymers are obtained as aqueous dispersions or aqueous solutions or, after removal of the water content, as very free-flowing, water-dispersible or water-soluble powders.

The polymers have Fikentscher K values in the range from 10 to 60, measured in a 1% by weight ethanolic solution.

### Applications:

The copolymers are accordingly used as solubilizers for slightly water-soluble bioactive substances substances.

The term "slightly water-soluble" includes according to the invention also practically insoluble substances and means that at least 30 to 100 g of water are required per g of substance for the substance to dissolved in water at 20°C. In the case of practically insoluble substances, at least 10,000 g of water are required per g of substance.

In the context of the present invention, slightly water-soluble bioactive substances mean active pharmaceutical ingredients for humans and animals, cosmetic or agrochemical active substances or dietary supplements or dietetic active substances, preferably pharmaceutically active substances.

The present invention provides in particular amphiphilic compounds for use as solubilizers for pharmaceutical and cosmetic preparations and for food preparations. They have the property of solubilizing slightly soluble active ingredients in the area of pharmacy and cosmetics, slightly soluble dietary supplements, for example vitamins and carotenoids, but also slightly soluble active substances for use in crop protection agents and veterinary medical active ingredients.

### Solubilizers for cosmetics:

The copolymers can be employed according to the invention as solubilizers in cosmetic formulations. They are suitable for example as solubilizers for cosmetic oils. They have a good solubilizing capacity for fats and oils such as peanut oil, jojoba oil, coconut oil, almond oil, olive oil, palm oil, castor oil, soybean oil or wheatgerm oil or for essential oils such as dwarf pine oil, lavender oil, rosemary oil, spruce needle oil, pine needle oil, eucalyptus oil, peppermint oil, sage oil, bergamot oil, terpentine oil, melissa oil, sage oil, juniper oil, lemon oil, anise oil, cardamom oil, peppermint oil, camphor oil etc. or for mixtures of these oils.

The polymers of the invention can further be used as solubilizers for UV absorbers which are slightly soluble or insoluble in water, such as, for example, 2-hydroxy-4-methoxybenzophenone (Uvinul® M 40, from BASF), 2,2',4,4'-tetrahydroxybenzophenone (Uvinul® D 50), 2,2'-dihydroxy-4,4'-dimethoxybenzophenone (Uvinul®D49), 2,4-dihydroxybenzophenone (Uvinul® 400), 2'-ethylhexyl 2-cyano-3,3-diphenylacrylate (Uvinul® N 539), 2,4,6-trianilino-p-(carbo-2'-ethylhexyl-1'-oxy)-1,3,5-triazine (Uvinul^{®} T 150), 3-(4-methoxybenzylidene)camphor (Eusolex^{®} 6300, from Merck), 2-ethylhexyl N,N-dimethyl-4-aminobenzoate (Eusolex® 6007), 3,3,5-trimethylcyclohexyl salicylate, 4-isopropyldibenzoylmethane (Eusolex® 8020), 2-ethylhexyl p-methoxycinnamate and 2-isoamyl p-methoxycinnamate, and mixtures thereof.

The present invention therefore also relates to cosmetic preparations which comprise at least one of the copolymers of the invention having the composition stated at the outset as solubilizers. Preferred preparations are those which, besides the solubilizer, comprise one or more slightly soluble cosmetic active substances, for example the abovementioned oils or UV absorbers.

These formulations are water- or water/alcohol-based solubilizates. The solubilizers of the invention are employed in the ratio of from 0.2:1 to 20:1, preferably 1:1 to 15:1, particularly preferably 2:1 to 12:1, to the slightly cosmetic active substance.

The content of solubilizer of the invention in the cosmetic preparation is in the range from 1 to 50% by weight, preferably 3 to 40% by weight, particularly preferably 5 to 30% by weight, depending on the active substance.

It is possible in addition for further auxiliaries to be added to this formulation, for example nonionic, cationic or anionic surfactants such as alkyl polyglycosides, fatty alcohol sulfates, fatty alcohol ethersulfates, alkanesulfonates, fatty alcohol ethoxylates, fatty alcohol phosphates, alkylbetaines, sorbitan esters, POE-sorbitan esters, sugar fatty acid esters, fatty acid polyglycerol esters, fatty acid partial glycerides, fatty acid carboxylates, fatty alcohol sulfosuccinates, fatty acid sarcosinates, fatty acid isethionates, fatty acid taurinates, citric acid esters, silicone copolymers, fatty acid polyglycol esters, fatty acid amides, fatty acid alkanolamides, quaternary ammonium compounds, alkylphenol ethoxylates, fatty amino ethoxylates, cosolvents such as ethylene glycol, propylene glycol, glycerol and others.

Further ingredients which may be added are natural or synthetic compounds, e.g. lanolin derivatives, cholesterol derivatives, isopropyl myristate, isopropyl palmitate, electrolytes, colorants, preservatives, acids (e.g. lactic acid, citric acid).

These formulations are used for example in bath additives such as bath oils, aftershaves, face tonics, hair tonics, eau de cologne, eau de toilette and in sunscreen compositions. A further area of use is the oral care sector, for example in mouthwashes, toothpastes, denture adhesive creams and the like.

### Description of the solubilization method:

The copolymers of the invention can be employed for preparing solubilizates for cosmetic formulations either as 100% pure substance or, preferably, as aqueous solution.

Normally, the solubilizers will be dissolved in water and vigorously mixed with the slightly soluble cosmetic active substance to be used in each case.

However, it is also possible for the solubilizer to be mixed vigorously with the slightly soluble cosmetic active substance to be used in each case and then for demineralized water to be added while stirring continuously.

### Solubilizers for pharmaceutical applications:

The claimed copolymers are likewise suitable for use as solubilizer in pharmaceutical preparations of any type which may comprise one or more drugs which are slightly soluble or insoluble in water, and vitamins and/or carotenoids. Aqueous solutions or solubilizates for oral administration are of particular interest in this connection. Thus, the claimed copolymers are suitable for use in oral dosage forms such as tablets, capsules, powders, solutions. In these they may increase the bioavailability of the slightly soluble drug. Solid solutions of active ingredient and solubilizer are used in particular.

It is possible to employ for parenteral administration besides solubilizers also emulsions, for example fatty emulsions. The claimed copolymers are also suitable for processing a slightly soluble drug for this purpose.

Pharmaceutical formulations of the abovementioned type can be obtained by processing the claimed copolymers with active pharmaceutical ingredients by conventional methods and with use of known and novel active ingredients.

The application of the invention may additionally comprise pharmaceutical excipients and/or diluents. Excipients which are particularly mentioned are cosolvents, stabilizers, preservatives.

The active pharmaceutical ingredients used are insoluble or sparingly soluble in water. According to DAB 9 (German Pharmacopeia), the solubility of active pharmaceutical ingredients is categorized as follows: sparingly soluble (soluble in 30 to 100 parts of solvent); slightly soluble (soluble in 100 to 1000 parts of solvent); practically insoluble (soluble in more than 10000 parts of solvent). The active ingredients may in this connection come from any range of indications.

Examples which may be mentioned here are benzodiazepines, antihypertensives, vitamins, cytostatics - especially Taxol, anesthetics, neuroleptics, antidepressants, agents having antiviral activity, antibiotics, antimycotics, fungicides, chemotherapeutics, urologicals, platelet aggregation inhibitors, sulfonamides, spasmolytics, hormones, immunoglobulins, sera, thyroid therapeutics, psychoactive drugs, antiparkinson agents and other antihyperkinetics, ophthalmologicals, neuropathy products, calcium metabolism regulators, muscle relaxants, anesthetics, lipid-lowering agents, hepatotherapeutics, coronary agents, cardiac agents, immunotherapeutics, regulatory peptides and their inhibitors, hypnotics, sedatives, gynecologicals, gout remedies, fibrinolytics, enzyme products and transport proteins, enzyme inhibitors, emetics, blood flow stimulators, diuretics, diagnostic aids, corticoids, cholinergics, biliary therapeutics, anti asthmatics, bronchodilators, beta-receptor blockers, calcium antagonists, ACE inhibitors, arteriosclerosis remedies, antiinflammatory drugs, anticoagulants, antihypertensives, antihypoglycemics, antihypertensives, antifibrinolytics, antiepileptics, antiemetics, antidotes, antidiabetics, antiarrhythmics, antianemics, antiallergics, anthelmintics, analgesics, analeptics, aldosterone antagonists, slimming agents.

One possible production variant is to dissolve the solubilizer in the aqueous phase, if appropriate with gentle heating, and subsequently to dissolve the active ingredient in the aqueous solubilizer solution. It is likewise possible to dissolve solubilizer and active ingredient simultaneously in the aqueous phase.

It is also possible to use the copolymers of the invention as solubilizer for example by dispersing the active ingredient in the solubilizer, if appropriate with heating, and mixing with water while stirring.

A further possibility is for the solubilizers to be processed in the melt with the active ingredients. It is possible in this way in particular to obtain solid solutions. Also suitable for this purpose is the melt extrusion process, inter alia. A further possibility for producing solid solutions is also to prepare solutions of solubilizer and active ingredient in suitable organic solvents and subsequently to remove the solvent by usual processes.

The invention therefore also relates in general to pharmaceutical preparations which comprise at least one of the copolymers of the invention as solubilizer. Preferred preparations are those which, besides the solubilizer, comprise an active pharmaceutical ingredient which is slightly soluble or insoluble in water, for example from the abovementioned areas of indication.

Particularly preferred pharmaceutical preparations from those mentioned above are formulations which can be administered orally.

The content of solubilizer of the invention of the pharmaceutical preparation is in the range from 1 to 75% by weight, preferably 5 to 60% by weight, particularly preferably 5 to 50% by weight, depending on the active ingredient.

A further particularly preferred embodiment relates to pharmaceutical preparations in which the active ingredients and the solubilizer are present as solid solution. In this case, the ratio of solubilizers to active ingredient is preferably from 1:1 to 4:1 by weight.

### Solubilizers for food preparations:

Besides use in cosmetics and pharmacy, the copolymers of the invention are also suitable as solubilizers in the food sector for nutritional substances, auxiliaries or additives which are slightly soluble or insoluble in water, such as, for example, fatsoluble vitamins or carotenoids. Examples which may be mentioned are beverages colored with carotenoids.

### Solubilizers for crop protection preparations:

Use of the copolymers of the invention as solubilizers in agrochemistry may comprise inter alia formulations which comprise pesticides, herbicides, fungicides or insecticides, especially including preparations of crop protection agents employed as formulations for spraying or watering.

The copolymers of the invention are distinguished by a particularly good solubilizing effect. They are also able to form so-called solid solutions with slightly soluble substances. Solid solutions refer according to the invention to systems in which no portions of the slightly soluble substance are evidently crystalline on visual inspection.

The preparation and use of the copolymers of the invention is explained in more detail in the following examples.

### Preparation of the copolymers

### Abbreviations used:

VP: N-vinyl pyrrolidone

### General procedure

The initial charge was heated in a stirred apparatus under an N₂ atmosphere to 80°C. When the temperature was reached, feed 1 and feed 2 were started. Feed 1 was metered in over the course of 6h, feed 2 was metered in over the course of 6.5 h. After all the feeds had been metered in, the reaction mixture was polymerized for a further 2 h. After the further polymerization, the reaction mixture was diluted with 200 ml of solvent. Volatile constituents were removed by steam distillation. The final aqueous solutions were dried in a vacuum oven.

### Example 1

Initial charge: 750 g isopropanol, 10 g N-vinyl pyrrolidon, 80.1 g octene-1
Feed 1: 300 g isopropanol, 310 g N-vinyl pyrrolidon
Feed 2: 18.99 g tert-butyl perpivalate, 100 g isopropanol

Solids content: 30.1 % b.w.

### Example 2

Initial charge: 750 g isopropanol, 10 g N-vinyl pyrrolidon, 88.89 g octadecene-1
Feed 1: 300 g isopropanol, 310 g N-vinyl pyrrolidon
Feed2: 18.99 g tert-butyl perpivalate, 100 g isopropanol

Solids content: 27.2 % b.w.

### Example 3

Initial charge: 750 g isopropanol, 10 g N-vinyl pyrrolidon, 60.61 g octene-1
Feed 1: 300 g isopropanol, 330 g N-vinyl pyrrolidon
Feed 2: 18.99 g tert-butyl perpivalate, 100 g isopropanol

Solids content: 25.4 % b.w.

### Example 4

Initial charge: 750 g isopropanol, 10 g N-vinyl pyrrolidon, 101.01 g octene-1
Feed 1: 300 g isopropanol, 290 g N-vinyl pyrrolidon
Feed 2: 18.99 g tert-butyl perpivalate, 100 g isopropanol

Solids content: 24.4 % b.w.

### Production of solid solutions

The polymer-active ingredient mixture was produced by weighing the active ingredient and the polymer in the ratio 50:50 by weight into a suitable glass vessel (2 g of each) and then adding 16 ml of dimethylformamide as solvent. The mixture was stirred with a magnetic stirrer at 20°C for 24 hours. The solution was then applied to a glass plate using a 120 µm knife. This plate was dried under a hood at RT for 0.5 hour and then dried in a drying oven at 50°C and 10mbar for a further 0.5 hour in order to remove the solvent quantitatively. The samples were subsequently inspected visually. If the films were clear and the active ingredient did not crystallize after 7 days, the active ingredient was assessed as stably dissolved in the polymer (indication in Table 1: 50). If no stable systems could be produced at a ration of 50: 50, the experiment was repeated at a ratio of 30:70 (indication in table: <50)

**Table 1: Stability of a solid solution**

| Polymer Ex. No. | Carbamazepine | Estradiol | Piroxicam | Clotrimazol |
|---|---|---|---|---|
| 1 | <50 | 50 | <50 | 50 |
| 2 | <50 | <50 | <50 | <50 |
| 3 | <50 | 50 | <50 | 50 |
| 4 | <50 | 50 | <50 | 50 |

### Preparation of solubilizates

2 g of the copolymer were weighed into a glass beaker. A drug was then weighed into each mixture in order to obtain a supersaturated solution, as follows. If the mass weighed in dissolved in the medium, the weight was increased until a sediment formed. Amount of active ingredient weighed in: 17-β-estradiol 0.2 g; piroxicam 0.2; clotrimazole 0.2 g; carbamazepine 0.3 g; ketoconazole 0.25 g; griseofulvin 0.25 g; cinnarizine 0.25 g.

Phosphate buffer of pH 7.0 was then added until solubilizer and phosphate buffer were present in the ratio of 1:10 by weight. A magnetic stirrer was used to stir this mixture at 20°C for 72 hours. A resting period of at least 1 hour followed. The mixture was filtered and then measured by photometry, and the content of active ingredient was determined: see Table 2, content as [g/100ml].

**Table 2**

| Polymer Ex. No. | Carbamazepine | Estradiol | Piroxicam | Clotrimazol |
|---|---|---|---|---|
| 1 | 0.17 | 0.16 | 0.59 | - |
| 2 | 0.15 | 0.30 | 0.35 | 0.05 |
| 3 | 0.17 | 0.13 | 0.41 | 0.02 |
| 4 | 0.19 | 0.27 | 0.42 | 0.04 |

## Claims

1. The use of copolymers obtained by free-radical polymerization of a mixture of
i) 0.1 to 40% by weight of an olefine, and
ii) 60 to 99.9 % by weight of N-vinyl lactam
with the proviso that the total of components i), ii) and iii) equals 100% by weight,
as solubilizers for slightly water-soluble bioactive substances.

2. The use according to claim 1, where the copolymers are obtained from
i) 3 to 30% by weight of an olefine
ii) 70 to 97% by weight of N-vinyl lactam.

3. The use according to claim 1 or 2, where the copolymers are obtained from:
i) 5 to 20% by weight of an olefine
ii) 80 to 95 % by weight of N-vinyl lactam.

4. The use according to any of claims 1 to 3, where N-vinyl pyrrolidone employed as component ii).

5. The use according to any of claims 1 to 4, where the copolymers have a K value from 10 to 60.

6. The use according to any of claims 1 to 5 for producing pharmaceutical preparations for the treatment of diseases.

7. The use according to any of claims 1 to 5 for cosmetic preparations.

8. The use according to any of claims 1 to 5 for agrochemical preparations.

9. The use according to any of claims 1 to 5 for dietary supplements or dietetic compositions.

10. The use according to any of claims 1 to 5 for food products.

11. Preparations of slightly water-soluble bioactive substances comprising as solubilizers copolymers obtained by free-radical polymerization of a mixture of
iii) 0.1 to 40% by weight of an olefine, and
iv) 60 to 99.9 % by weight of N-vinyl lactam,
with the proviso that the total of components i), ii) and iii) equals 100% by weight.

12. Preparations according to claim 11, in which the slightly water-soluble substance is present in the form of a solid solution in the copolymers.

13. Preparations according to any of claims 11 to 12, comprising an active pharmaceutical ingredient as slightly water-soluble bioactive substance.

14. Preparations according to claim 13, in the form of dosage forms which can be administered orally.

15. Preparations according to claim 11, comprising a cosmetic active substance as slightly water-soluble bioactive substance.

16. Preparations according to claim 11, comprising an agrochemical active substance as slightly water-soluble bioactive substance.

17. Preparations according to claim 11, comprising as slightly water-soluble bioactive substance a dietary supplement or dietetic composition.
